**Europäisches Patentamt**

**European Patent Office**

**Office européen des brevets**

(11) Numéro de publication: **0 011 583**
**A1**

## (12) DEMANDE DE BREVET EUROPEEN

(21) Numéro de dépôt: **79420056.8**

(22) Date de dépôt: **07.11.79**

(51) Int. Cl.³: **C 04 B 35/60**
**C 09 K 3/14**

(30) Priorité: **09.11.78 FR 7832188**

(43) Date de publication de la demande:
**28.05.80 Bulletin 80/11**

(84) Etats Contractants Désignés:
**AT BE CH DE GB IT NL SE**

(71) Demandeur: **Société Française d'Electrométallurgie.
SOFREM
10, rue Général Foy
F-75008 Paris(FR)**

(72) Inventeur: **Doutreloux, Michel
10, avenue Jean Jaurès
F-73200 Albertville(FR)**

(72) Inventeur: **Ducreux, René
17, boulevard Jomardière
F-38120 St. Egreve(FR)**

(72) Inventeur: **Ligneau, Jean Louis
F-65410 Sarrancolin(FR)**

(72) Inventeur: **de Valon, Patrice
69, rue de Clichy
F-75009 Paris(FR)**

(74) Mandataire: **Pascaud, Claude et al,
PECHINEY UGINE KUHLMANN 28, rue de Bonnel
F-69433 Lyon Cedex 3(FR)**

(54) Procédé et dispositif pour l'obtention, à l'abri de l'air, de produits abrasifs à cristallisation fine et homogène.

(57) L'invention concerne un procédé de production, à l'abri de l'air, d'abrasifs à cristallisation fine et homogène, exempts de porosités.

Elle consiste à immerger dans un bain de produit abrasif fondu (5) un bloc réfrigérant (1) formé par l'assemblage d'une pluralité d'éléments (2) formant entre eux des évidements de faible profondeur, puis à le retirer, et à récupérer le produit abrasif solidifié dans les évidements, par exemple en écartant les éléments (2).

Application à la production d'abrasifs à base d'alumine ou d'alumine et de zircone.

./...

FIG.4

# PROCEDE ET DISPOSITIF POUR L'OBTENTION, A L'ABRI DE L'AIR, DE PRODUITS ABRASIFS A CRISTALLISATION FINE ET HOMOGENE

La présente invention concerne l'obtention de produits abrasifs à cristallisation fine et homogène. Elle est relative à un procédé et à un dispositif de production à l'abri de l'air.

Il a été reconnu, depuis longtemps, que les produits abrasifs obtenus par électrofusion d'oxydes réfractaires notamment ceux d'aluminium ou de zirconium, ainsi que les composés $Al_2O_3 - ZrO_2$ (brevet français 488 847 au nom de NORTON), contenant aussi accessoirement en faible quantité des oxydes de chrome, magnésium, silicium, titane, etc... sont d'autant plus solides que leur cristallisation est plus fine, tout au moins dans certaines limites (brevets US 1 192 709 au nom de CARBONRUNDUM C° et US 1 226 892 au nom d'EXOLON C°).

On sait qu'un refroidissement très rapide du bain fondu diminue la dimension des cristaux qui se forment pendant la solidification et diverses méthodes ont été proposées pour accélérer ce refroidissement.

On peut, par exemple, couler le liquide dans des lingotières de petites dimensions. La vitesse de refroidissement à laquelle on peut parvenir et, par conséquent, la dimension des cristaux qui en dépend, est fonction des dimensions des lingotières et de la masse de produit abrasif qu'on coule.

Il a été aussi proposé de refroidir le produit fondu en le versant sur une surface métallique dont la face opposée est refroidie par une circulation d'eau (brevet français 1 319 102 au nom de NORTON). Les brevets français 2 005 931, 2 125 082 et 2 166 082, également au nom de NORTON, décrivent des procédés d'obtention de produits électrofondus à cristallisation très fine par coulée et solidification rapide sur des blocs réfractaires, des matériaux sphéroïdaux ferromagnétiques ou des plaques en graphite ou en métal.

On fabrique, par ces procédés, des produits abrasifs formés de cristaux unitaires dont la dimension est inférieure à 200 microns. Leur ténacité est très supérieure à celle des produits de même composition chimique

0011583

mais à cristallisation plus grossière obtenus par les procédés classiques de coulée en lingotières de grandes dimensions.

Toutefois, lors de la mise en oeuvre de tous ces procédés de coulée, on assiste à un entraînement d'air dans le jet de coulée et à un brassage entre le bain liquide et l'air présent entre les masses refroidissantes. La solidification et la formation des cristaux abrasifs se font donc en présence d'air. De ce fait, les produits obtenus comportent une quantité importante de microporosités préjudiciables à la solidité des grains abrasifs.

Pour supprimer ces microporosités, on peut envisager de couler sous vide. Il a également été proposé dans le texte du brevet français 1 546 142 au nom de DYNAMIT NOBEL A.G., de protéger le bain fondu de l'action de l'azote de l'air par interposition d'une atmosphère protectrice, par exemple d'anhydre carbonique.

De telles pratiques sont compliquées et coûteuses car, en raison des hautes températures atteintes par le bain fondu et de la faible productivité des méthodes conduisant à des cristallisations fines, il est nécessaire d'avoir soit des enceintes fermées de grande dimension, soit des débits considérables de gaz de protection ou d'évacuation de l'air pour mise sous vide.

Le procédé, objet de la présente invention, qui permet de surmonter les inconvénients de l'art antérieur, fournit des produits abrasifs à cristallisation fine et homogène, pratiquement exempts de porosités et de retassures, du fait que la cristallisation est obtenue rapidement, uniformément et entièrement à l'abri de l'air. Il consiste, dans son principe, non pas à couler le produit électrofondu hors du four de fusion mais à le prélever directement dans le four. Il est caractérisé en ce que l'on trempe, dans le bain liquide de produit abrasif électrofondu, au moins un bloc réfrigérant constitué par une pluralité d'éléments, formant entre eux des évidements de faible profondeur, pendant une durée qui peut aller de quelques secondes à quelques dizaines de secondes - par exemple de 10 à 60 secondes - puis en ce que l'on retire le bloc réfrigérant du bain et que l'on récupère le produit abrasif solidifié dans les évidements, entre les éléments du bloc réfrigérant. Il est également possible, bien que cela soit, en pratique, rarement nécessaire, d'activer le remplissage des évidements lors du trempage, et de diminuer encore les risques d'introduction d'air dans l'abrasif en cours de solidification, en raccordant la partie supérieure du bloc réfrigérant à un moyen d'aspiration de type connu.

La récupération peut s'effectuer en disjoignant les éléments auxquels l'abrasif solidifié adhère relativement peu, d'autant plus qu'il y a généralement une différence sensible entre le coefficient de dilatation des éléments et celui de l'abrasif. La récupération peut également s'effectuer en soumettant l'ensemble du bloc réfrigérant à une vibration ou à une vibration combinée avec une percussion. La récupération peut être précédée d'un arrosage à l'eau pour activer le refroidissement du produit et favoriser sa fragmentation. L'arrosage peut se poursuivre pendant toute la phase de récupération. Il est particulièrement commode d'opérer au-dessus d'une grille qui supporte le bloc réfrigérant et permet de récupérer le produit abrasif dans un récipient placé sous la grille.

Ce procédé, sous ses différentes variantes, se prête particulièrement bien à une mise en oeuvre en continu par l'utilisation d'une pluralité de blocs réfrigérants que l'on trempe successivement dans le four de fusion alimenté, par ailleurs, en produit solide à fondre.

Le dispositif, pour la mise en oeuvre du procédé d'obtention de produits abrasifs à cristallisation fine et homogène, qui est également un objet de l'invention, consiste en un bloc réfrigérant comportant une pluralité d'éléments formant entre eux des évidements de faible profondeur ouverts à leurs parties inférieure et supérieure, les termes "supérieur" et "inférieur" étant définis par référence à la position du bloc réfrigérant lorsqu'il est en position d'utilisation. Il peut être construit, par exemple, en graphite, en un matériau réfractaire ou en un acier, c'est-à-dire en un matériau résistant à l'immersion brusque dans un bain fondu à une température de l'ordre de 2000° C. Bien qu'il soit théoriquement possible de forer ou d'usiner ces évidements dans la masse d'un bloc, il est infiniment plus commode de constituer le bloc réfrigérant par un assemblage d'éléments individuels, de préférence identiques entre eux pour en faciliter l'échange.

Selon un premier mode de réalisation, le bloc réfrigérant est formé par une pluralité de plaques comportant un évidement de faible profondeur,

0011583

cette profondeur étant sensiblement constante sur toute la longueur de l'évidement. Cette profondeur peut être comprise entre 0,1 et 30 millimètres et, de préférence, entre 0,5 et 12 millimètres. Ces plaques sont assemblées, un peu en-dessous de leur sommet, par au moins un dispositif élastique, flexible, qui le maintient en contact, et elles sont pourvues, dans la partie supérieure, au-dessus du dispositif d'assemblage, d'une dépouille qui permet de les écarter en éventail grâce à un dispositif de serrage extérieur, et qui laisse, en outre, un large passage pour l'échappement sans turbulence de l'air contenu dans les évidements lorsqu'on plonge le bloc réfrigérant dans le bain d'abrasif électrofondu.

Selon un autre mode de réalisation, le bloc réfrigérant est également formé par une pluralité de plaques comportant un évidement de faible profondeur et cette profondeur diminue progressivement, mais dans une faible mesure, du bas vers le haut. Grâce à cette dépouille, dont l'angle peut être fixé par exemple entre 1 et 10° - valeurs données à simple titre indicatif - l'abrasif solidifié peut être récupéré par percussion et/ou vibration sans qu'il soit besoin de disjoindre les éléments.

Mais, la mise en oeuvre de cette variante est mal adaptée au cas où les blocs réfrigérants sont en graphite ou en réfractaire, en raison de leur fragilité. Elle s'applique essentiellement aux blocs réfrigérants en métaux tels que les aciers.

Enfin, un autre objet de l'invention est l'application du procédé et du dispositif qui viennent d'être décrits à la production d'abrasifs à cristallisation fine et homogène, exempts de porosité et, en particulier, à la production d'abrasif à base d'alumine pure (corindon), d'alumine combinée à la zircone (corindon-zircone), ou de bauxite (corindons noirs).

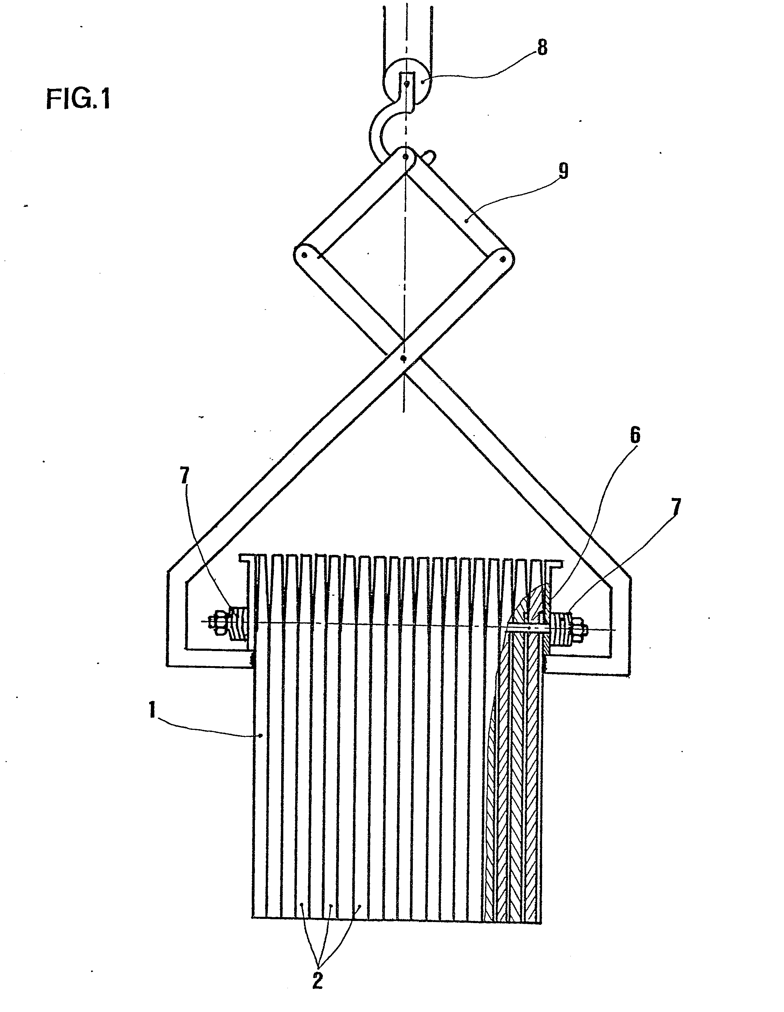

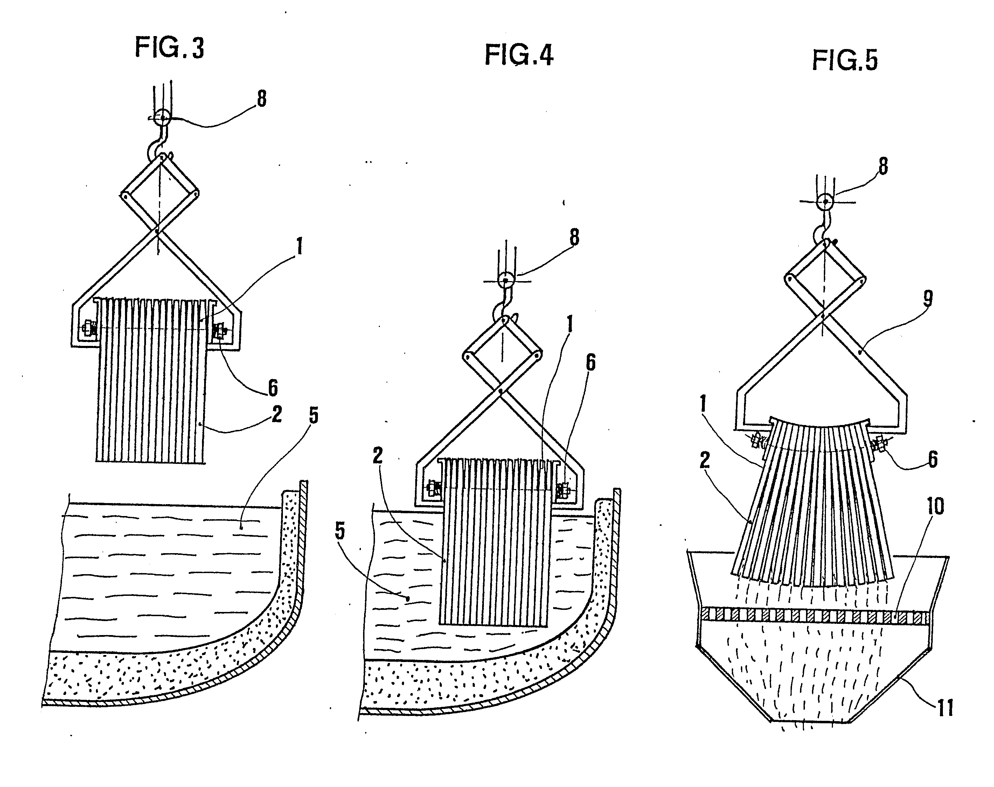

Les figures 1 à 5 et les exemples 1 à 3 qui suivent explicitent la mise en oeuvre de l'invention.

La figure 1 montre un assemblage de plaques formant un bloc réfrigérant.

La figure 2 montre une vue isométrique d'une de ces plaques.

Les figures 3 et 4 montrent l'opération de trempage dans un bain élec-

trofondu.

La figure 5 montre un moyen de récupération du produit solidifié entre les plaques.

Le bloc réfrigérant (1) est constitué par l'assemblage de plaques (2), par exemple en acier, en graphite ou en autre matériau réfractaire pouvant résister à la fois à l'action physique et chimique du produit électrofondu et au choc thermique résultant de son introduction rapide dans le bain porté à une température de l'ordre de 2000° C. L'épaisseur de ces plaques varie en fonction de l'épaisseur du produit que l'on désire solidifier. Chaque plaque comporte sur une face un évidement (3) dans lequel se loge le produit solidifié à obtenir. Chaque plaque comporte, en outre, une dépouille (4) qui sert à la fois pour l'évacuation rapide de l'air sans turbulence lors de la descente du bloc réfrigérant dans le bain de produit électrofondu (5) et pour l'ouverture de ce bloc en vue de la récupération du produit solidifié. Il n'y a donc, du fait de cette disposition, aucun risque d'introduction d'air dans le produit en cours de solidification. Les plaques sont maintenues par des tirants (6) qui les compriment entre elles avec des ressorts ou des rondelles élastiques (7) ou tout autre système flexible.

La manutention se fait avec un appareil quelconque de levage (8) par l'intermédiaire d'une pince de serrage (9) qui maintient les plaques entre elles. Lorsque l'on veut récupérer le produit solidifié dans les évidements (3), il suffit de déposer le dispositif, par exemple sur une grille de récupération (10), de reprendre le bloc réfrigérant à sa partie supérieure avec la pince de serrage (9) afin d'écarter ces plaques en éventails et, éventuellement, d'arroser à l'eau; le produit se détache alors tout seul et on le récupère dans la trémie (11) située sous la grille (10).

Le processus est sensiblement identique dans le cas où la récupération du produit solidifié s'effectue par vibration et/ou percussion, sans écartement préalable des plaques.

On obtient ainsi un produit à très fine cristallisation, parfaitement homogène, solidifié à l'abri de l'air, donc sans porosités.

EXEMPLE D'APPLICATION N° 1

On fond au four électrique un mélange de composition :

$$Al_2O_3 \ldots\ldots\ldots\ldots\ldots\ldots 96,1 \%$$
$$TiO_2 \ldots\ldots\ldots\ldots\ldots\ldots 3,0 \%$$
$$SiO_2 \ldots\ldots\ldots\ldots\ldots\ldots 0,5 \%$$
$$Fe_2O_3 \ldots\ldots\ldots\ldots\ldots\ldots 0,2 \%$$

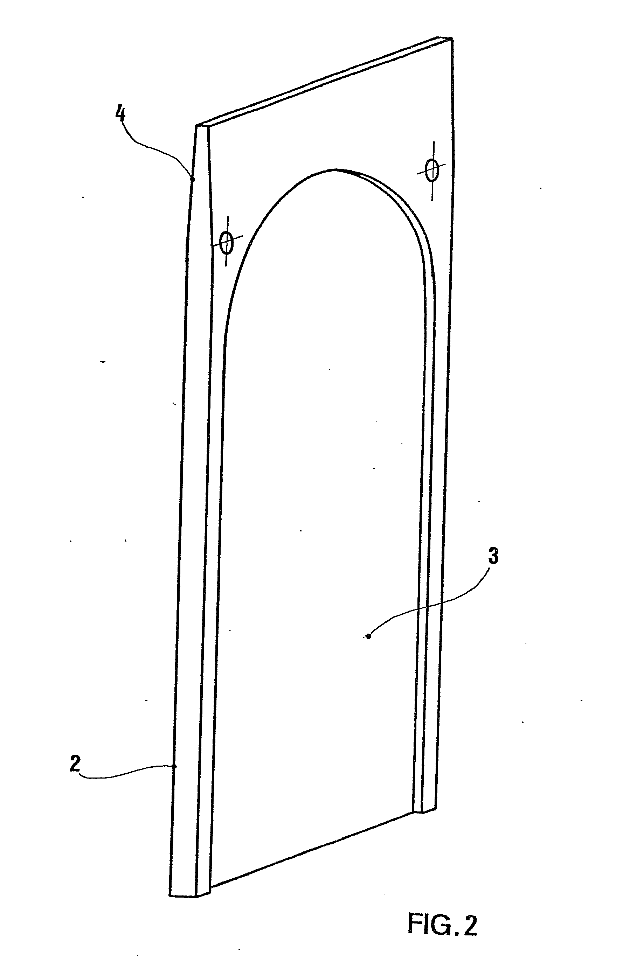

Le bain étant obtenu, on trempe dans la cuve, sans arrêter le four, le bloc réfrigérant constitué de 20 plaques métalliques d'épaisseur 40 mm, de largeur 800 mm et de hauteur 1.200 mm, évidées sur une profondeur de 10 mm selon la figure 2. Le dispositif est descendu rapidement de 800 mm dans le bain et y reste plongé environ 20 secondes. On l'extrait alors rapidement; il est maintenu quelques secondes au-dessus du bain, ce qui permet aux croûtes extérieures de se fragmenter et de retomber dans le bain. Le dispositif est alors déposé sur la grille. La pince de serrage le reprend en partie haute. Les plaques s'écartent en éventail. On arrose à l'eau. Le produit microcristallin tombe sur la grille, puis dans la trémie située en-dessous. Le produit est ensuite broyé de la façon habituelle.

On obtient à chaque immersion environ 480 kg de corindon dont la dimension des cristaux est comprise entre 5 et 80 microns, avec une majorité entre 10 et 40 microns. L'indice de solidité du corindon ainsi obtenu est de 95 % contre 88 % pour le conrindon d'analyse chimique identique obtenu par coulée dans les conditions habituelles.

On mesure "l'indice de solidité" par la méthode suivante :
On prélève 25 gr de grains compris entre les tamis ASTM 14 et 16 (ouverture 1,41 et 1,11 mm). Ces grains sont placés dans un cylindre d'acier de 100 mm de diamètre et 130 mm de long, contenant 16 boulets d'acier de 25 mm de diamètre. On fait tourner le cylindre autour de son axe placé horizontalement pendant 15 minutes, sa vitesse de rotation étant 70 tours/minute. On récupère les grains que l'on tamise sur une machine ROTAP munie des tamis ASTM 25, 45 et 80, d'ouverture 0,71 mm, 0,35 mm et 0,177 mm. On additionne le poids du refus au tamis 25 multiplié par 4, le poids du refus au tamis 45 multiplié par 2, le poids du refus au tamis 80 multiplié par 1 et le poids du passant au tamis 80 multiplié par 0,5. On obtient ainsi un nombre qui est l'indice de solidité exprimé en °/00.

EXEMPLE D'APPLICATION N° 2

Dans un four à arc électrique, on fond un mélange consistant en :

| | |
|---|---|
| 74,2 % ............... | $Al_2O_3$ |
| 24,8 % ............... | $ZrO_2$ |
| 0,2 % ............... | $TiO_2$ |
| 0,1 % ............... | $SiO_2$ |
| 0,3 % ............... | $Fe_2O_3$ |
| 0,10 %............... | $CaO$ |
| 0,2 %................ | $MgO$ |

Le bain étant obtenu, on trempe dans la cuve, sans arrêter le four, le bloc réfrigérant constitué de 20 plaques métalliques d'épaisseur 40 mm, de largeur 800 mm et de hauteur 1.200 mm, évidées sur une profondeur de 10 mm selon la figure 2. Le dispositif est descendu rapidement de 800 mm dans le bain et y reste plongé environ 20 secondes. On l'extrait alors rapidement; il est maintenu quelques secondes au-dessus du bain, ce qui permet aux croûtes extérieures de se fragmenter et de retomber dans le bain. Le dispositif est alors déposé sur la grille. La pince de serrage le reprend en partie haute; les plaques s'écartent en éventail; on arrose à l'eau; le produit microcristallin tombe sur la grille, puis dans la trémie située en-dessous. Le produit est ensuite broyé de la façon habituelle.

On obtient à chaque immersion environ 510 kg de corindon dont la dimension des cristaux est comprise entre 0,2 et 60 microns, avec une majorité entre 5 et 30 microns. L'indice de solidité du corindon ainsi obtenu est de 98 %.

EXEMPLE D'APPLICATION N° 3

Dans un four à arc électrique, on fond un mélange consistant en :

| | |
|---|---|
| 58,1 %................ | $Al_2O_3$ |
| 40,9 %................ | $ZrO_2$ |
| 0,2 %................ | $TiO_2$ |
| 0,10 %............... | $SiO_2$ |
| 0,2 %................ | $Fe_2O_3$ |
| 0,10 %............... | $CaO$ |
| 0,2 %................ | $MgO$ |

Le bain étant obtenu, on trempe dans la cuve, sans arrêter le four, le bloc réfrigérant constitué de 40 plaques métalliques d'épaisseur 20 mm, de largeur 800 mm et de hauteur 1.200 mm, évidées sur une profondeur de 4 mm selon la figure 2. Le dispositif est descendu rapidement de 800 mm dans le bain et y reste plongé environ 20 secondes. On l'extrait alors rapidement; il est maintenu quelques secondes au-dessus du bain, ce qui permet aux croûtes extérieures de se fragmenter et de retomber dans le bain. Le dispositif est alors déposé sur la grille. La pince de serrage le reprend en partie haute. Les plaques s'écartent en éventail. On arrose à l'eau. Le produit microcristallin tombe sur la grille, puis dans la trémie située en-dessous. Le produit est ensuite broyé de la façon habituelle.

On obtient à chaque immersion environ 540 kg de corindon dont la dimension des cristaux est comprise entre 0,2 et 10 microns, avec una majorité entre 0,2 et 5 microns. L'indice de solidité du corindon ainsi obtenu est de 98 %.

La mise en oeuvre de l'invention fait appel à un matériel simple, d'un entretien facile, et, en grande partie, de type standard.

Elle permet, en outre, une exploitation en continu sans arrêt du four d'électrofusion, en utilisant une série de blocs réfrigérants du même type, et en alimentant le four, par ailleurs, en produit solide à fondre.

Elle est particulièrement bien adaptée à la production des différents types d'abrasifs à base d'alumine ou d'alumine et de zircone.

REVENDICATIONS

1/ Procédé de fabrication à l'abri de l'air d'un produit abrasif à cristallisation fine et homogène et exempt de porosité, caractérisé en ce que l'on plonge dans un bain électrofondu dudit abrasif un bloc réfrigérant comportant une pluralité d'éléments formant entre eux des évidements de faible profondeur, en ce que l'on retire le bloc réfrigérant du bain et que l'on récupère le produit solidifié dans lesdits évidements.

2/ Procédé de fabrication à l'abri de l'air d'un produit abrasif à cristallisation fine et homogène et exempt de porosité, selon revendication 1, caractérisé en ce que le bloc réfrigérant est maintenu dans le bain d'abrasif électrofondu pendant une durée comprise entre 10 et 60 secondes.

3/ Procédé de fabrication à l'abri de l'air d'un produit abrasif à cristallisation fine et homogène et exempt de porosité, selon revendication 1, caractérisé en ce que la partie supérieure du bloc réfrigérant est raccordée à un moyen d'aspiration de l'air dans les évidements.

4/ Procédé de fabrication à l'abri de l'air d'un produit abrasif à cristallisation fine et homogène et exempt de porosité, selon revendication 1, caractérisé en ce que le produit solidifié est récupéré en disjoignant les éléments formant le bloc réfrigérant.

5/ Procédé de fabrication à l'abri de l'air d'un produit abrasif à cristallisation fine et homogène et exempt de porosité, selon revendication 1, caractérisé en ce que le produit solidifié est récupéré par application de percussion et/ou de vibrations sur le bloc réfrigérant.

6/ Procédé de fabrication à l'abri de l'air d'un produit abrasif à cristallisation fine et homogène et exempt de porosité, selon l'une des revendications précédentes, caractérisé en ce que le bloc réfrigérant est arrosé à l'eau pendant la phase de récupération du produit solidifié.

7/ Procédé de fabrication à l'abri de l'air d'un produit abrasif à cristallisation fine et homogène et exempt de porosité, selon l'une quelconque des revendications précédentes, caractérisé en ce que le bloc réfrigérant retiré du bain d'abrasif électrofondu, est posé sur une grille pendant la phase de récupération du produit solidifié.

8/ Procédé de fabrication à l'abri de l'air d'un produit abrasif à cristallisation fine et homogène et exempt de porosité, selon l'une quelconque des revendications précédentes, caractérisé en ce que l'on opère en continu par l'utilisation successive d'une pluralité de blocs réfrigérants.

9/ Dispositif pour la mise en oeuvre du procédé selon l'une quelconque des revendications 1 à 8, permettant d'obtenir un produit abrasif à cristallisation fine et homogène et exempt de porosité, à partir d'un bain électrofondu dudit abrasif, caractérisé en ce qu'il comporte une pluralité d'éléments formant entre eux des évidements de faible profondeur ouverts à leur partie inférieure et supérieure.

10/ Dispositif de fabrication à l'abri de l'air d'un produit abrasif à cristallisation fine et homogène et exempt de porosité, selon revendication 9, caractérisé en ce qu'il est construit en un matériau choisi parmi le graphite, les produits réfractaires, les aciers.

11/ Dispositif de fabrication à l'abri de l'air d'un produit abrasif à cristallisation fine et homogène et exempt de porosité, selon revendication 9, caractérisé en ce que les éléments sont constitués par des plaques assemblées, un peu en-dessous de leur sommet, par au moins un dispositif élastique flexible et en ce que lesdites plaques sont pourvues, dans la partie située au-dessus du dispositif élastique, d'une dépouille qui permet de les écarter en éventail par serrage.

12/ Dispositif de fabrication à l'abri de l'air d'un produit abrasif à cristallisation fine et homogène et exempt de porosité, selon revendication 9, caractérisé en ce que les évidements ont une profondeur constante sur toute leur longueur.

13/ Dispositif de fabrication à l'abri de l'air d'un produit abrasif à cristallisation fine et homogène et exempt de porosité, selon revendication 9, caractérisé en ce que les évidements ont une profondeur progressivement décroissante de la partie inférieure vers la partie supérieure des éléments de façon à former un angle de dépouille

0011583

compris entre 1 et 10°.

14/ Dispositif de fabrication à l'abri de l'air d'un produit abrasif à cristallisation fine et homogène et exempt de porosité, selon revendication 9, caractérisé en ce que les évidements ont une profondeur comprise entre 0,1 et 30 millimètres.

15/ Dispositif de fabrication à l'abri de l'air d'un produit abrasif à cristallisation fine et homogène et exempt de porosité, selon revendication 9, caractérisé en ce que les évidements ont une profondeur comprise entre 0,5 e 12 millimètres.

16/ Dispositif de fabrication à l'abri de l'air d'un produit abrasif à cristallisation fine et homogène et exempt de porosité, selon l'une quelconque des revendications précédentes, caractérisé en ce que la partie supérieure des évidements est raccordée à un moyen d'aspiration.

17/ Application du procédé et du dispositif selon l'une quelconque des revendications précédentes, à la production d'abrasifs à base d'alumine ou à base d'alumine et de zircone, à cristallisation fine et homogène et exempts de porosité.

0011583

FIG.1

0011583

FIG.2

FIG.3

FIG.4

FIG.5

**Office européen des brevets**

**RAPPORT DE RECHERCHE EUROPEENNE**

0011583

Numéro de la demande

EP 79 42 0056

| Catégorie | Citation du document avec indication, en cas de besoin, des parties pertinentes | Revendication concernee |
|---|---|---|
| X / | <u>FR - A - 2 333 761</u> (US INDUSTRIES)<br><br>\* Revendications 1-25; page 4, lignes 4-25; page 6, lignes 3-5 \* | 1,2,5, 6,8, 10,17 |
| X | <u>AT - B - 327 036</u> (TREIBACHER <u>CHEMISCHE WERKE AG</u>)<br><br>\* Revendications; page 2, lignes 53-56; page 3, lignes 18-26,42-44,50-52 \* | 1,4,6, 9-12, 14,15, 17 |
| | <u>FR - A - 2 290 266</u> (NORTON CO)<br><br>\* Revendications 1,3,8-11; page 14, lignes 16-39; page 15, lignes 15-24 \* | 1,9-15, 17 |

**DOCUMENTS CONSIDERES COMME PERTINENTS**

**CLASSEMENT DE LA DEMANDE (Int. Cl. 3)**

C 04 B 35/60
C 09 K 3/14

**DOMAINES TECHNIQUES RECHERCHES (Int. Cl. 3)**

C 04 B 35/60
C 09 K 3/14

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été etabli pour toutes les revendications

| Lieu de la recherche | Date d'achèvement de la recherche | Examinateur |
|---|---|---|
| La Haye | 14-02-1980 | SCHURMANS |

**OEB Form 1503.1  06.78**